# EUROPEAN PATENT APPLICATION

(11) **EP 3 763 883 A1**
(43) Date of publication of application: **13.01.2021**
(21) Application number: 20184749.8
(22) Date of filing: 08.07.2020
(51) Int. Cl.: E02F 9/02, B62D 55/084

(54) **CONSTRUCTION MACHINERY**

(30) Priority: 08.07.2019 KR 20190082196
(71) Applicant: Doosan Infracore Co., Ltd., Incheon 22502 (KR)
(72) Inventor: KIM, Jaehyuk, 22188 Incheon (KR)
(74) Representative: Isarpatent

(57) **Abstract**

An embodiment relates to a construction machinery including a lower traveling body (200) that travels using a track. The lower traveling body includes a first side frame (210) and a second side frame (220) disposed parallel to each other and respectively equipped with the track; a center frame (250) disposed between the first side frame and the second side frame; and a driving device comprising a track variable cylinder (350) having one side coupled to one side surface, opposing the center frame (250), of the first side frame (210), and a push rod (310) having one side slidably inserted into another side of the track variable cylinder (350) and another side passing through a side surface, opposing the center frame (250), of the second side frame (220) and coupled to the side frame inside the second frame.

## Description

### [TECHNICAL FIELD]

The present disclosure relates to a construction machine, and more particularly, to a construction machine having a variable track width.

### [DISCUSSION OF RELATED ART]

Construction machinery refers to all machines used in civil engineering or building construction. In general, a construction machine has an engine that supplies power by burning fuel and a hydraulic pump that operates with the engine power to discharge a hydraulic oil, and the construction machine travels or drives various working devices by using the hydraulic oil discharged by the hydraulic pump.

For example, a construction machine such as an excavator may include an upper swing body equipped with various working devices and a driver's cabin, and a lower traveling body supporting the upper swing body to be rotatable and equipped with a track for travelling. In addition, the lower traveling body may include a center frame supporting the upper traveling body, a pair of side frames disposed opposing each other in parallel, on the left and right sides of the center frame, to support the track, and a plurality of horizontal frames connected across the pair of side frames and secured to the center frame. A width of the track of the excavator, that is, a distance between the pair of side frames is typically determined when manufacturing the excavator.

If the width of the track of excavators is large, excavators may handle relatively large workloads. On the other hand, if the track width of excavators is narrow, the workload capability is reduced, but the excavators may easily enter a narrow space of the work site or a narrow road of the driveway to the work site.

However, there are cases that an excavator with a large track width is needed to increase work stability because a large force is required when performing works at the work site, although the width of the driveway for entering the work site is narrow. For example, when performing a remodeling operation to rebuild the interior of a building, the track width should be small when entering the interior of the building or moving to multiple work locations within the building, but when performing works at the work site, a wide width of the track is required. However, since the width of the track is fixed in conventional excavators, there is a problem in that it cannot satisfy the demand for the change in width (length) of the track according to the working environment. [DETAILED DESCRIPTION OF THE INVENTION]

### [TECHNICAL OBJECTIVES]

Embodiments of the present disclosure are directed to a construction machine allowing a width of a track to be variable according to the working environment.

### [TECHNICAL SOLUTION TO THE PROBLEM]

According to an embodiment, a construction machinery including a lower traveling body that travels using a track, the lower traveling body includes a first side frame and a second side frame disposed parallel to each other and respectively equipped with the track; a center frame disposed between the first side frame and the second side frame; and a driving device comprising a track variable cylinder having one side coupled to one side surface, opposing the center frame, of the first side frame, and a push rod having one side slidably inserted into another side of the track variable cylinder and another side passing through a side surface, opposing the center frame, of the second side frame and coupled to the side frame inside the second frame.

The first side frame may include a first side bracket installed at one side surface opposing the center frame, the second side frame may include a second side bracket installed thereinside, and the lower traveling body may further include a first coupling pin passing through one end portion of the first side bracket and the track variable cylinder to couple the first side bracket and the track variable cylinder; and a second coupling pin passing through another end portion of the second side bracket and the push rod to couple the second side bracket and the push rod.

Longitudinal directions of the first coupling pin and the second coupling pin may cross each other.

The center frame may include a first slide guide portion and a second slide guide portion, each having a tube shape, formed in directions crossing longitudinal directions of the first side frame and the second side frame, and the lower traveling body may further include a first slide frame having one side coupled to the first side frame and another side slidably inserted into the first slide guide portion of the center frame; and a second slide frame having one side coupled to the second side frame and another side slidably inserted into the second slide guide portion of the center frame.

One surface, opposing the second side frame, of the first slide guide portion may be open to expose another end portion of the first slide frame, and one surface, opposing the first side frame, of the second slide guide portion may be open to expose another end portion of the second slide frame.

The lower traveling body may further include stoppers coupled to the first slide frame and the second slide frame, respectively, and limiting a moving distance.

The first slide guide portion and the second slide guide portion of the center frame may include movement limiting recesses formed to a predetermined length along movement directions of the first slide frame and the second slide frame, respectively. One side of each of the stoppers may be coupled to the first slide frame and the second slide frame, respectively, and another side thereof may be inserted into the movement limiting recesses, respectively.

The stopper may be formed in a left-right symmetric plate shape and provided to make a surface contact with an end portion of the movement limiting recess.

The center frame may include a circular opening defined upward and a turntable portion comprising a swiveling gear provided on an inner circumferential surface of the circular opening, and the stopper may be formed at a position exposed through the circular opening in a state where a distance between the first side frame and the second side frame is farthest away from each other.

### [BRIEF DESCRIPTION OF THE DRAWINGS]

FIG. 1 is a side view illustrating a construction machine according to an embodiment of the present disclosure.
FIG. 2 is a plan view illustrating a lower traveling body of FIG. 1.
FIG. 3 is a plan view illustrating an operating state of the lower traveling body of FIG. 2.
FIG. 4 is a perspective view enlarging a connection state between a cylinder and a first side frame in FIG. 2.
FIG. 5 is a perspective view enlarging a connection state between a push rod and a second side frame in FIG. 2.
FIG. 6 is a cross-sectional view illustrating interior of the second side frame in FIG. 5.
FIGS. 7 and 8 are perspective views illustrating a state in which a first slide frame and a second slide frame are inserted into a center frame.
FIG. 9 is a perspective view illustrating stoppers installed at the first slide frame and the second slide frame, respectively.

### [DETAILED DESCRIPTION]

Hereinafter, embodiments of the present disclosure will be described in detail with reference to the accompanying drawings so that those skilled in the art to which the present disclosure pertains may readily understand and practice the inventive concept. The present disclosure may be implemented in many different forms and is not limited to the embodiments described herein.

Note that the drawings are schematic and not to scale. The relative dimensions and proportions of the parts in the drawings are illustrated exaggerated or reduced in size for clarity and convenience, and any dimensions are merely illustrative and not limiting. Like reference numerals are used to indicate similar features in the same structures, elements, or parts appearing in two or more drawings.

Embodiments of the present disclosure specifically represent representative embodiments of the present disclosure. Accordingly, various modifications based on the illustration are expected. Accordingly, embodiments are not limited to a specific form of the illustrated area, and includes, for example, modification of the form by manufacturing.

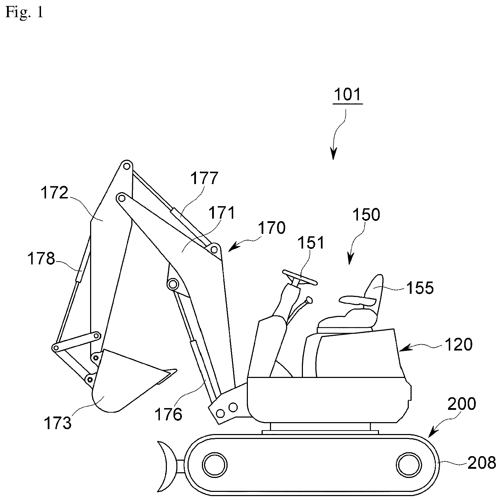

Hereinafter, a construction machine 101 according to an embodiment of the present disclosure will be described with reference to FIGS. 1 to 9.

Herein, a small-size excavator will be described as an example of the construction machine 101. However, the construction machine 101 is not limited to such a small-size excavator, and may be applied to all construction machines 101 using a track 208.

As illustrated in FIG. 1, the construction machine 101 according to an embodiment of the present disclosure may include a lower traveling body 200 and an upper swing body 120 rotatably mounted on the lower traveling body 200, and further include a driver's cabin 150 and a work device 170 installed at the upper swing body 120.

The lower traveling body 200 supports the upper swing body 120 to be rotatable (swingable) and may travel, by using a traveling device, using a power generated by an engine installed inside the upper swing body 120.

The upper swing body 120 may rotate on the lower traveling body 200 to set a working direction. In addition, an engine, a fuel tank, a hydraulic pump, and an oil tank may be installed inside the upper swing body 120.

The driver's cabin 150 is installed on the upper swing body 120, and a driver boards thereon to operate the construction machine. The driver's cabin 150 is provided with an operating device 151 and a driver's seat 155, and if necessary, the driver's cabin 150 is surrounded by a cover to protect the driver.

The working device 170 may include a boom 171, an arm 172, a bucket 173, and driving devices 176, 177, 178 for driving them. For example, a boom cylinder 176 for controlling movement of the boom 171 may be installed between the boom 171 and the upper swing body 120. In addition, an arm cylinder 177 for controlling movement of the arm 172 may be installed between the boom 171 and the arm 172, and a bucket cylinder 178 for controlling movement of the bucket 173 may be installed between the arm 172 and the bucket 173.

As each of the boom cylinder 176, the arm cylinder 177, and the bucket cylinder 178 extends or contracts, the boom 171, the arm 172, and the bucket 173 may implement various movements, and the working device may perform various works. In this case, the boom cylinder 176, the arm cylinder 177 and the bucket cylinder 178 are operated by a hydraulic oil supplied from the hydraulic pump provided inside the upper swing body 120.

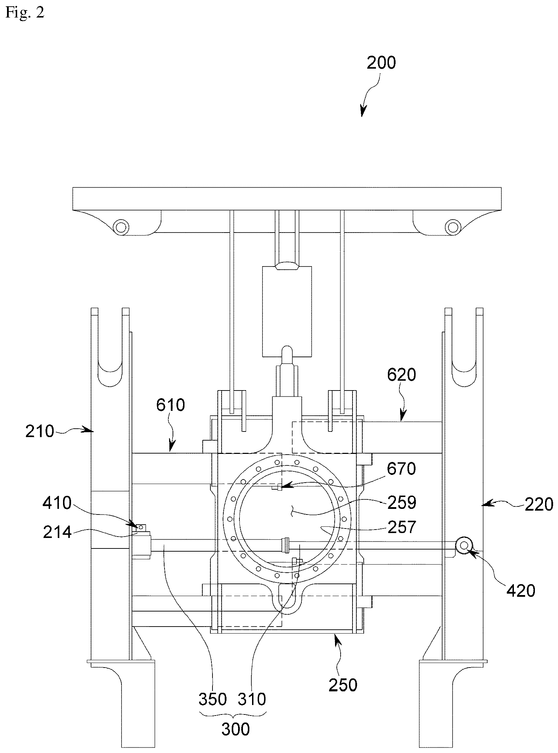

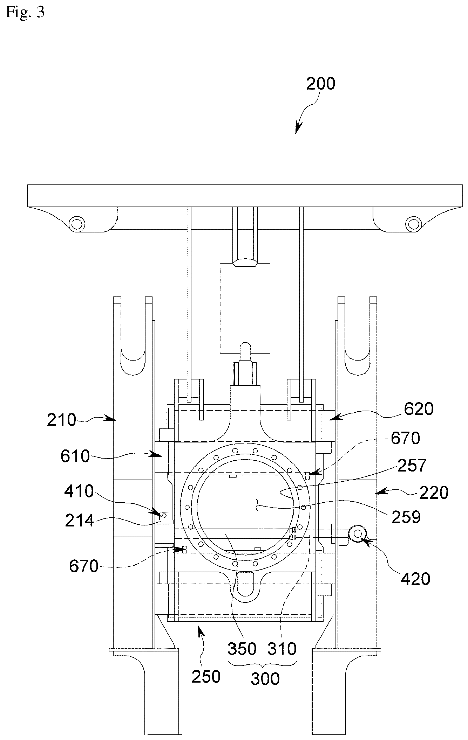

In addition, as illustrated in FIGS. 2 and 3, the lower traveling body 200 used in the construction machine 101 according to an embodiment of the present disclosure includes a first side frame 210, a second side frame 220, a center frame 250, and a track actuator 300.

In addition, the lower traveling body 200 used in the construction machine 101 according to an embodiment of the present disclosure may further include a first coupling pin 410, a second coupling pin 420, a first slide frame 610, a second slide frame 620, and a stopper 670.

The first side frame 210 and the second side frame 210 are disposed parallel to each other and have a longitudinal length in a front-rear direction. In addition, tracks 208 are installed at the first side frame 210 and the second side frame 220, respectively. That is, the tracks 208 rotate, while enclosing the first side frame 210 and the second side frame 220, respectively, and the lower traveling body travels according to rotation of the tracks 208.

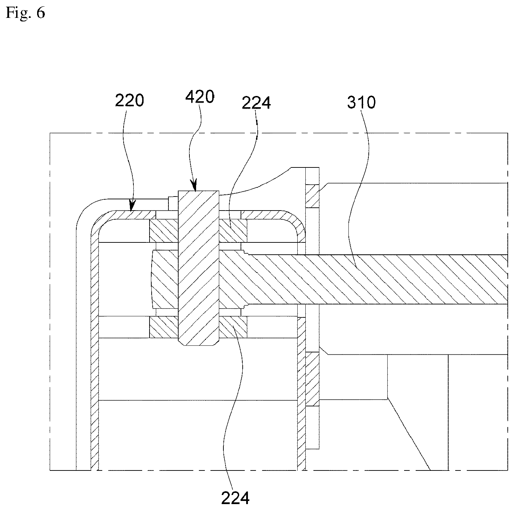

In addition, the first side frame 210 may include a first side bracket 214 installed at one side, opposing the center frame 250, of the first side frame 210, and the second side frame 220 may include a second side bracket 224 (see FIG. 6) installed inside the second side frame 220. The first side bracket 214 and the second side bracket 224 are provided to connect the track actuator 300, to be described below, to the first side frame 210 and the second side frame 220.

The center frame 250 is disposed between the first side frame 210 and the second side frame 220. In addition, the center frame 250 supports the upper swing body 120 to be rotatable. To this end, the center frame 250 may include a circular opening 259 open (defined) upward and a turntable portion 257 including a swiveling gear provided on an inner circumferential surface of the circular opening 259. As such, the upper swing body 120 is engaged with the turntable portion 257 to swing.

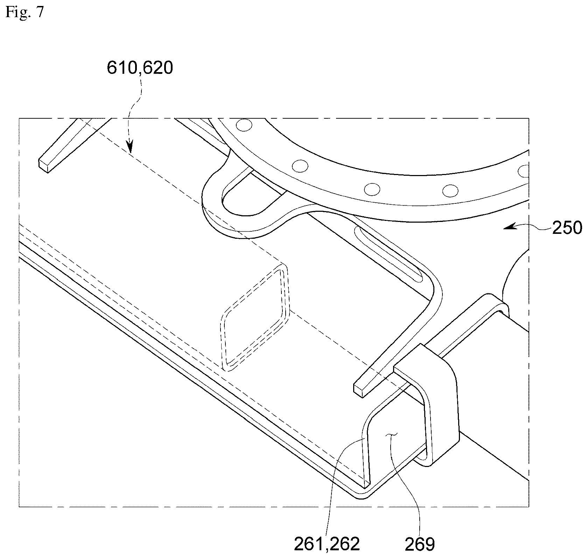

In addition, the center frame 250 may further include a first slide guide portion 261 and a second slide guide portion 262 (see FIG. 7), each in a tube shape, formed in a direction crossing longitudinal directions of the first side frame 210 and the second side frame 220.

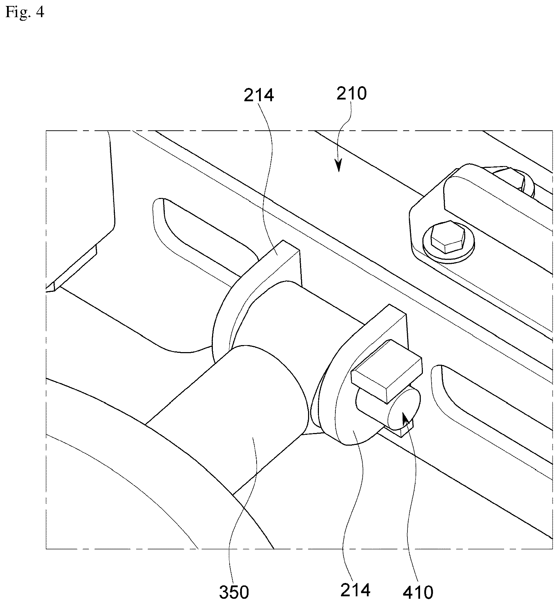

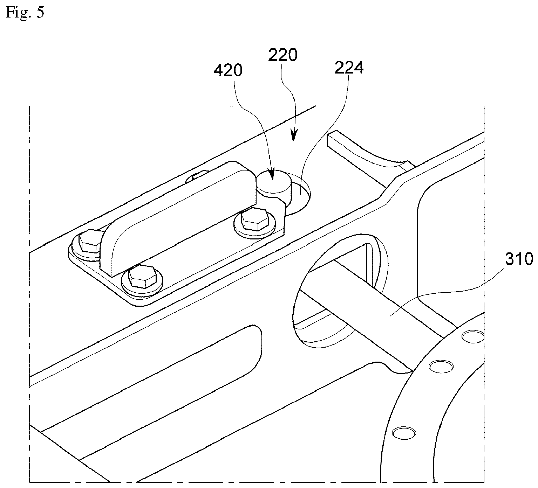

The track actuator 300 includes a track variable cylinder 350 and a push rod 310. The track variable cylinder 350, as illustrated in Figure 4, has one side coupled to one side surface, opposing the center frame 250, of the first side frame 210, and the push rod 310, as illustrated in FIGS. 5 and 6, has one side slidably inserted into another side of the track variable cylinder 350 and another side passing through a side surface, opposing the center frame 250, of the second side frame 220 and coupled to the second side frame 220 inside the second side frame 220.

The first coupling pin 410 passes through one end portion of the first side bracket 214 and the track variable cylinder 350 to couple the first side bracket 214 and the track variable cylinder 350.

The second coupling pin 420 passes through another end portion of the second side bracket 224 and the push rod 310 to couple the second side bracket 224 and the push rod 310.

Since the track actuator 300 is connected to the first side frame 210 and the second side frame 220 in the structure as described above, a variable distance between the first side frame 210 and the second side frame 220 may be secured to be a maximum, and a shortest distance between the first side frame 210 and the second side frame 220 may be reduced to a minimum.

When an overall length of the track actuator 300 decreases, the shortest distance between the first side frame 210 and the second side frame 220 may be reduced. When the shortest distance between the first side frame 210 and the second side frame 220 decreases, a minimum width of the track 208 decreases, so that the construction machine 101 may easily enter the work site when the work site is narrow or a driveway for entering the work site is narrow.

However, if the overall length of the track actuator 300 is reduced, a maximum stroke of the track actuator 300 is reduced, so the variable distance by the track actuator 300 is shortened, and the longest distance between the first side frame 210 and the second side frame 220 also decreases. The length of the track variable cylinder 350 and the push rod 310 of the track actuator 300 is proportional to a variable distance between the first side frame 210 and the second side frame 220. In addition, the length of the track variable cylinder 350 and the push rod 310 of the track actuator 300 is determined depending on the longest distance between the first side frame 210 and the second side frame 220. As such, when the maximum width of the track 208 decreases, the construction machine 101 may not handle a large load during work.

Accordingly, in an embodiment of the present disclosure, securing the variable distance between the first side frame 210 and the second side frame 220 to the maximum and reducing the shortest distance between the first side frame 210 and the second side frame 220 is found to be significantly effective.

To this end, in an embodiment of the present disclosure, another side of the push rod 310 passes through a side surface, opposing the center frame 250, of the second side frame 220 and is coupled to the second side frame 220 through the second side bracket 224, inside the second side frame 220. Accordingly, a maximum stroke of the track actuator 300 may be increased, while maintaining the same distance between the first side frame 210 and the second side frame 220. That is, the maximum length of the track variable cylinder 350 and the push rod 310 may be increased.

Meanwhile, one side of the track variable cylinder 350 may also pass through a side surface, opposing the center frame 250, of the first side frame 210 and be coupled to the first side frame 210 inside the first side frame 210. However, if one side of the track variable cylinder 350 passes through the side surface of the first side frame 210 to be coupled to the first side frame 210 inside the first side frame 210, and another side of the push rod 310 also passes through a side surface of the second side frame 220 to be coupled to the second side frame 220 inside the second side frame 220, the overall assembly characteristics of the construction machine 101 is significantly degraded, thus lowering productivity and making maintenance quite difficult as well. That is, since it is difficult to connect the track actuator 300 to the first side frame 210 and the second side frame 220, it is not easy to manufacture as well as to maintenance.

Accordingly, by coupling one side of the track variable cylinder 350 to one side surface, opposing the center frame 250, of the first side frame 210, and allowing another side of the push rod 310 to pass through a side surface, opposing center frame 250, of the second side frame 220 to be coupled to the second side frame 220 inside the second side frame 220, not only the maximum stroke of the track actuator 300 with respect to the distance between the first side frame 210 and the second side frame 220 may be increased, but also the assembly characteristics of the first side frame 210 and the second side frame 220 with the track actuator 300 may be prevented from being significantly degraded.

Particularly, in an embodiment of the present disclosure, the push rod 310 having a relatively smaller diameter than the track variable cylinder 350 passes through a side surface of the second side frame 220, such that a through hole defined at the second side frame 220 may be substantially minimized, and degradation of strength of the second side frame 220 due to the through hole may be substantially minimized.

In addition, in an embodiment of the present disclosure, longitudinal directions of the first coupling pin 410 and the second coupling pin 420 cross each other. Due to the nature of the structure in which the distance between the first side frame 210 and the second side frame 220 is variable, a gap exists between the first side frame 210 and the center frame 250 and between the second side frame 220 and the center frame 250. Due to this gap, the first side frame 210 and the second side frame 220 may sag in a vertical direction or may be inclined in the front-rear direction. That is, the first side frame 210 and the second side frame 220 may be distorted without being perfectly parallel to each other. If the first side frame 210 and the second side frame 220 are distorted, a bending force may be applied to the track actuator 300 coupled to each of the first side frame 210 and the second side frame 220. Such a bending force may be concentrated on the first coupling pin 410 and the second coupling pin 420 that couple the track actuator 300 with the first side frame 210 and the second side frame 220.

According to an embodiment of the present disclosure, since the longitudinal directions of the first coupling pin 410 and the second coupling pin 420 cross each other, it is possible to suppress the occurrence of the afore-mentioned bending force or to effectively resist the bending force. Accordingly, the first coupling pin 410 and the second coupling pin 420 may be prevented from being damaged or dislocated, and it is possible to suppress the track variable cylinder 350 and the push rod 310 of the track actuator 300 from being bent and malfunctioning due to the bending force.

As illustrated in FIGS. 2, 3, and 7, the first slide frame 610 may have one side coupled to the first side frame 210 and another side slidably inserted into the first slide guide portion 261 of the center frame 250. The second slide frame 620 may have one side coupled to the second side frame 220 and another side slidably inserted into the second slide guide portion 262 of the center frame 250. As an example, the first slide guide portion 261 and the second slide guide portion 262 may be formed in symmetric same shapes. Accordingly, in FIG. 7, the first slide guide portion 261 and the second slide guide portion 262 are illustrated in one figure.

When the distance between the first side frame 210 and the second side frame 220 varies, the first slide frame 610 and the second slide frame 620 allow the first side frame 210 and the second side frame 220 to move while maintaining a stable horizontal state. In such an embodiment, one side surface, opposing the second side frame 220, of the first slide guide portion 261 formed at the center frame 250 may define an opening 269 so that another end portion of the first slide frame 610 inserted into the first slide guide portion 261 is exposed. In addition, one side surface, opposing the first side frame 210, of the second slide guide portion 262 may define an opening 269 so that another end portion of the second slide frame 620 inserted into the second slide guide portion 262 is exposed. The first slide guide portion 261 and the second slide guide portion 262 are formed in shapes corresponding to the first slide frame 610 and the second slide frame 620, respectively. In one example, the first slide guide portion 261 and the second slide guide portion 262 may each have a rectangular steel pipe shape.

If one surface opposite to another surface to which the first slide frame 610 and the second slide frame 620 are inserted is closed in the first slide guide portion 261 and the second slide guide portion 262, when the first slide frame 610 and the second slide frame 620 move inside the first slide guide portion 261 and the second slide guide portion 262, a foreign matter such as soil that has been introduced into the first slide guide portion 261 and the second slide guide portion 262 is not discharged, such that the movement of the first slide frame 610 and the second slide frame 620 may be interfered, and the distance between the first side frame 210 and the second side frame 220 may not vary. Since the construction machine 101 is often operated in a poor working environment, it is likely that foreign matter such as soil enters into the first slide guide portion 261 and the second slide guide portion 262 of the center frame 250 during operations.

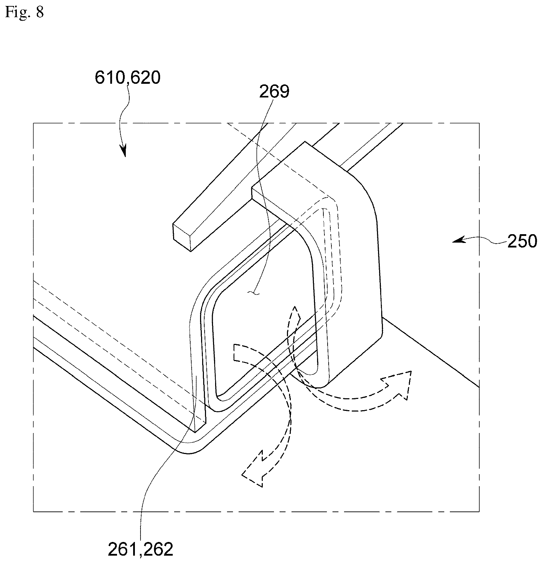

However, according to an embodiment of the present disclosure, as illustrated in FIG. 8, one surface opposite to another surface to which the first slide frame 610 and the second slide frame 620 are inserted is open in the first slide guide portion 261 and the second slide guide portion 262, so that foreign matter such as soil may be smoothly discharged to the opposite side, while the first slide guide portion 261 and the second slide guide portion 262 move. Accordingly, there is no need to discharge, through separate operations, foreign matter such as soil that has been introduced into the first slide guide portion 261 and the second slide guide portion 262.

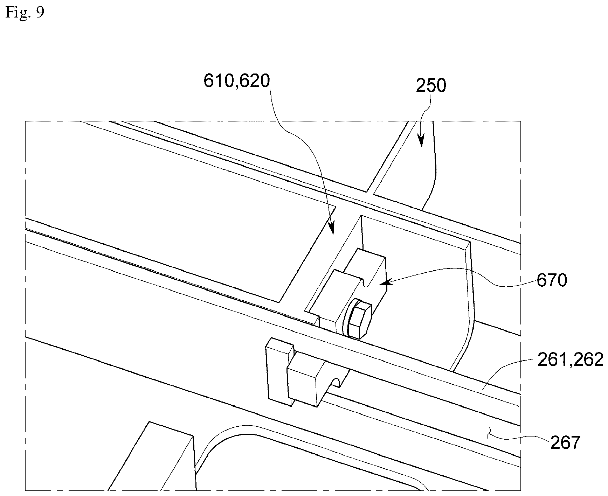

In addition, as illustrated in FIG. 9, the first slide guide portion 261 and the second slide guide portion 262 of the center frame 250 may have movement limiting recesses 267, respectively, defined to a predetermined length along movement directions of the first slide frame 610 and the second slide frame 620. As an example, the movement limiting recesses 267 of the first slide guide portion 261 and the second slide guide portion 262 may be formed in symmetric same shapes. Accordingly, in FIG. 9, the movement limiting recesses 267 of the first slide guide portion 261 and the second slide guide portion 262 are illustrated in one figure.

The stoppers 670 are coupled to the first slide frame 610 and the second slide frame 620, respectively, to limit the moving distance of the first slide frame 610 and the second slide frame 620. For example, the stoppers 670 may limit the movement of the first side frame 210 and the second side frame 220 when the track actuator 300 is extended to the maximum. That is, the stopper 670 does not allow the distance between the first side frame 210 and the second side frame 220 to fall outside a preset variable range. Here, the preset variable range may be determined according to the size and use of the construction machine 101 during manufacturing.

Specifically, the stoppers 670 may have one sides coupled to the first slide frame 610 and the second slide frame 620, respectively, and another sides inserted into the movement limiting recesses 267 defined at the first slide guide portion 261 and the second slide guide portion 262, respectively.

In addition, the stopper 670 is formed in a plate shape to make a surface contact with an end portion of the movement limiting recess 267. The stopper 670 limits the movement of the first side frame 210 and the second side frame 220 by colliding with the end portion of the movement limiting recess 267. In such a case, since an impact force when the stopper 670 collides is considerable, the stopper 670 or a bolt for fastening the stopper 670 may not overcome the impact force, thus being damaged, or the center frame 250 colliding with the stopper 670 may be damaged. To prevent this, in an embodiment of the present disclosure, the stopper 670 is formed to make surface contact with the end portion of the movement limiting recess 267, thereby increasing the contact area and securing a stable surface pressure.

In addition, since the stopper 670 serves to limit the maximum distance between the first side frame 210 and the second side frame 220, in a case where the stopper 670 is incorrectly assembled, one or more of the first side frame 210 and the second side frame 220 may be pushed out and an accident may occur. In order to prevent such an incorrect assembly of the stopper 670, in an embodiment of the present disclosure, the stoppers 670 may be formed in left-right (bilateral) symmetric shapes. Specifically, a central portion of the stopper 670 may be coupled to the first slide frame 610 and the second slide frame 620 through a fastening member such as a bolt. In addition, the stopper 670 may have a symmetric shape in both directions with respect to the central portion. Accordingly, once the stopper 670 is coupled to the first slide frame 610 and the second slide frame 620, the stopper 670 is invariably inserted into the movement limiting recess 267 to be locked at the end portion of the movement limiting recess 267. That is, according to an embodiment of the present disclosure, it is substantially impossible that the stopper 670 is incorrectly assembled.

In addition, as illustrated in FIG. 2, the stopper 670 may be formed at a position exposed through the circular opening 259 of the center frame 250 in a state where the distance between the first side frame 210 and the second side frame 220 is farthest away from each other. Accordingly, even if the stopper 670 is damaged, it may be easily replaced by accessing through the circular opening 259 of the center frame 250.

With such a configuration, the construction machine 101 according to an embodiment of the present disclosure may effectively allow the width of the track 208 to be variable according to the working environment.

As set forth hereinabove, according to one or more embodiments of the present disclosure, the construction machine may effectively vary the width of the track according to the working environment.

The above description of the present disclosure is for illustration only, and a person skilled in the technical field to which the present disclosure pertains may understand that it may be easily modified to other specific forms without changing the technical spirit or essential features of the present disclosure. Accordingly, it should be understood that embodiments described above are illustrative in all respects and not restrictive.

The scope of the present disclosure is defined by the following claims rather than the above detailed description, and it should be interpreted that all changes or modified forms derived from the meaning, scope of the claims, and equivalent concepts thereof are included in the scope of the present disclosure.

## Claims

1. A construction machinery comprising a lower traveling body (200) that travels using a track (208), the lower traveling body (200) comprisng:
a first side frame (210) and a second side frame (220) disposed parallel to each other and respectively equipped with the track (208);
a center frame (250) disposed between the first side frame (210) and the second side frame (220); and
a track actuator (300) comprising a track variable cylinder (350) having one side coupled to one side surface, opposing the center frame (250), of the first side frame (210), and a push rod (310) having one side slidably inserted into another side of the track variable cylinder (350) and another side passing through a side surface, opposing the center frame (250), of the second side frame (220) and coupled to the side frame inside the second frame.

2. The construction machinery of claim 1, wherein the first side frame (210) comprises a first side bracket (214) installed at one side surface opposing the center frame (250),
the second side frame (220) comprises a second side bracket (224) installed thereinside, and
the lower traveling body (200) further comprises:
a first coupling pin (410) passing through one end portion of the first side bracket (214) and the track variable cylinder (350) to couple the first side bracket (214) and the track variable cylinder (350); and
a second coupling pin (420) passing through another end portion of the second side bracket (224) and the push rod (310) to couple the second side bracket (224) and the push rod (310).

3. The construction machinery of claim 2, wherein longitudinal directions of the first coupling pin (410) and the second coupling pin (420) cross each other.

4. The construction machinery of claim 1, wherein the center frame (250) comprises a first slide guide portion (261) and a second slide guide portion (262), each having a tube shape, formed in directions crossing longitudinal directions of the first side frame (210) and the second side frame (220), and
the lower traveling body (200) further comprises:
a first slide frame (610) having one side coupled to the first side frame (210) and another side slidably inserted into the first slide guide portion (261) of the center frame (250); and
a second slide frame (620) having one side coupled to the second side frame (220) and another side slidably inserted into the second slide guide portion (262) of the center frame (250).

5. The construction machinery of claim 4, wherein one surface, opposing the second side frame (220), of the first slide guide portion (261) is open to expose another end portion of the first slide frame (610), and
one surface, opposing the first side frame (210), of the second slide guide portion (262) is open to expose another end portion of the second slide frame (620).

6. The construction machinery of claim 4, wherein the lower traveling body (200) further comprises stoppers (670) coupled to the first slide frame (610) and the second slide frame (620), respectively, and limiting a moving distance.

7. The construction machinery of claim 6, wherein the first slide guide portion (261) and the second slide guide portion (262) of the center frame (250) comprise movement limiting recesses formed to a predetermined length along movement directions of the first slide frame (610) and the second slide frame (620), respectively, and
one side of each of the stoppers (670) is coupled to the first slide frame (610) and the second slide frame (620), respectively, and another side thereof is inserted into the movement limiting recesses, respectively.

8. The construction machinery of claim 7, wherein the stopper (670) is formed in a left-right symmetric plate shape and provided to make a surface contact with an end portion of the movement limiting recess.

9. The construction machinery of claim 7, wherein the center frame (250) comprises a circular opening (259) defined upward and a cturntable portion (257) comprising a swiveling gear provided on an inner circumferential surface of the circular opening (259), and
the stopper (670) is formed at a position exposed through the circular opening (259) in a state where a distance between the first side frame (210) and the second side frame (220) is farthest away from each other.
